# FASCICULE DE BREVET EUROPEEN

(11) **EP 3 300 971 B1**
(45) Date de publication et mention de la délivrance du brevet: **24.07.2019**
(21) Numéro de dépôt: 17185145.4
(22) Date de dépôt: 07.08.2017
(51) Int. Cl.: B60S 1/52, B60S 1/54, B60S 1/56

(54) **DISPOSITIF DE NETTOYAGE DESTINE A PROJETER AU MOINS UN FLUIDE VERS UNE SURFACE A NETTOYER D'UN VEHICULE AUTOMOBILE**
REINIGUNGSVORRICHTUNG ZUM SPRITZEN MINDESTENS EINER FLÜSSIGKEIT AUF EINE ZU REINIGENDE OBERFLÄCHE EINES KRAFTFAHRZEUGS
CLEANING DEVICE INTENDED TO SPRAY AT LEAST ONE FLUID TOWARDS A SURFACE TO BE CLEANED OF A MOTOR VEHICLE

(30) Priorité: 28.09.2016 FR 1659178
(43) Date de publication de la demande: 04.04.2018
(73) Titulaire: Valeo Systèmes d'Essuyage, 78322 Le Mesnil Saint Denis (FR)
(72) Inventeur: GRASSO, Giuseppe, 63500 ISSOIRE (FR); TREBOUET, Marcel, 78322 LE MESNIL SAINT DENIS (FR)
(74) Mandataire: Valeo Systèmes d'Essuyage

(56) Documents cités:
- DE-A1-102014 213 282
- US-A1- 2015 183 406
- US-A1- 2015 296 108

## Description

La présente invention se rapporte au domaine des dispositifs d'aide à la conduite et, plus particulièrement, au domaine des systèmes de détection optique utilisés à cette fin. L'invention concerne plus particulièrement les dispositifs de nettoyage destinés à projeter au moins un fluide vers une surface à nettoyer d'un véhicule automobile, tel qu'un capteur optique d'un système de détection optique.

Le document DE 10 2014 213 282 A1 est considéré comme l'état de la technique le plus proche de l'objet des revendications indépendantes 1 et 3.

On appelle système de détection optique tout système comportant des capteurs optiques tels que des caméras, des capteurs laser (communément appelés LIDAR) ou autres capteurs basés sur l'émission et/ou la détection de la lumière dans le spectre visible ou invisible pour l'Homme, en particulier l'infrarouge.

De tels systèmes de détection optiques équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les données fournies par le système de détection optique doivent être de la meilleure qualité possible, et il est donc indispensable de disposer d'optiques propres pour réaliser ces acquisitions de données. Pour ce faire, un dispositif de nettoyage d'un capteur du système de détection optique (par exemple la lentille d'une caméra de prise de vues) peut être commandé pour injecter, sur ledit capteur, un fluide nettoyant juste avant que soit réalisée la détection (par exemple la prise de vue). Ces dispositifs de nettoyage ne doivent pas gêner le fonctionnement du capteur optique, et ils doivent être le plus compact possible pour répondre aux contraintes d'encombrement du véhicule. Par ailleurs, le fluide de nettoyage projeté sur un tel capteur optique pour en chasser les salissures étant, le plus souvent, un liquide, il est intéressant de sécher le plus rapidement possible ce capteur optique afin d'éviter tout risque de pollution du signal par d'éventuelles traces qu'un tel liquide pourrait laisser (gouttes, coulures, etc ...). Pour cela, il est connu de projeter sur le capteur optique, après le fluide de nettoyage, un flux d'air (ou un autre fluide de séchage) qui permet de débarrasser ce capteur du fluide de nettoyage et des salissures que celui-ci entraîne alors avec lui. De tels dispositifs de nettoyage comportent donc des moyens de transport et de distribution du fluide de nettoyage et du fluide de séchage. Le plus souvent, le circuit de distribution de fluide de nettoyage et le circuit de distribution de fluide de séchage (le plus souvent, de l'air) comportent des portions communes et/ou présentent une forme d'imbrication l'un avec l'autre. Afin de distribuer successivement fluide de nettoyage et fluide de séchage, il est connu d'utiliser un distributeur apte à commander notamment l'admission alternée, au sein d'un dispositif d'admission et de distribution des fluides de nettoyage et de séchage, de l'un ou l'autre de ces fluides.

Ces dispositifs de nettoyage ne doivent pas, par ailleurs, gêner le fonctionnement du capteur optique, et ils doivent être le plus compacts possibles pour répondre aux contraintes d'encombrement du véhicule. Pour cela, le plus souvent, les moyens de distribution des fluides de nettoyage et de séchage comportent une partie mobile entre une position de nettoyage, déployée, dans laquelle des orifices de distribution qu'ils comportent se trouvent au voisinage de la surface du capteur à nettoyer, et une position de repos, dans laquelle cette partie mobile est rétractée pour ne pas gêner la détection optique au moyen du capteur considéré.

Le plus souvent, c'est la pression du fluide de nettoyage admise dans cette partie mobile qui entraîne son déplacement vers sa position de nettoyage. Il convient donc, une fois le nettoyage réalisé, pour réaliser le séchage, de disposer de moyens qui maintiennent ladite partie mobile sensiblement en place pour que le fluide de séchage puisse être distribué au plus près de la surface du capteur considéré et le distributeur assure également ce rôle.

La présence d'un tel distributeur, typiquement électroniquement piloté, induit toutefois un coût supplémentaire ainsi qu'un risque supplémentaire de panne ou de dysfonctionnement du dispositif de nettoyage.

La présente invention a pour but de proposer un dispositif de nettoyage destiné à projeter au moins un fluide vers une surface à nettoyer d'un véhicule automobile, qui ne nécessite pas de distributeur associé tel que précédemment décrit, afin notamment de limiter les coûts d'obtention du dispositif, tout en préservant l'efficacité du nettoyage et du séchage du capteur optique considéré.

Dans ce but, l'invention a pour objet un dispositif de nettoyage destiné à projeter au moins un fluide vers une surface à nettoyer d'un véhicule automobile, tel qu'un capteur optique d'un système de détection optique, et comprenant au moins un dispositif d'admission et de distribution de fluides dans lequel sont admis sélectivement un fluide de nettoyage et un fluide de séchage à travers deux ensembles d'acheminement distincts depuis un embout d'admission propre à chaque fluide. Selon l'invention, le dispositif comprend en outre dans le dispositif d'admission et de distribution un élément d'obturation mobile entre une première position d'obturation de l'ensemble d'acheminement d'un fluide de nettoyage et une deuxième position de dégagement de cet ensemble d'acheminement d'un fluide de nettoyage.

Par surface à nettoyer, on peut comprendre un capteur optique d'un système de détection optique, la lentille d'une caméra, ou un élément particulier de la carrosserie.

Selon l'invention, dans la première position d'obturation de l'élément mobile, on bloque l'arrivée de fluide de nettoyage dans le dispositif d'admission et de distribution et l'on bloque également la sortie du fluide de nettoyage non utilisé dans l'opération précédente de nettoyage. Notamment dans le cas où c'est l'alimentation en fluide de nettoyage qui permet de déployer le dispositif d'admission dans une position opérationnelle de nettoyage et de séchage, il est intéressant de bloquer la position opérationnelle pour que l'opération de séchage puisse avoir lieu de façon optimale, et il est notable selon l'invention que l'on permet le blocage de cette position opérationnelle avec des éléments embarqués dans le dispositif d'admission et de distribution.

L'élément d'obturation peut participer à définir les ensembles d'acheminement des fluides de nettoyage et de séchage, dont la configuration est alors modifiée par la position de l'élément d'obturation.

Selon la revendication indépendante 1, le déplacement de l'élément d'obturation entre la première position et la deuxième position est obtenu par le différentiel de pression entre le fluide de séchage et le fluide de nettoyage de part et d'autre de l'élément d'obturation.

En d'autres termes, l'invention prévoit que, lorsqu'une quantité prédéfinie de fluide de nettoyage est admise dans le dispositif d'admission et de distribution du dispositif de nettoyage selon l'invention, la pression que ce fluide exerce sur l'élément d'obturation conduise ce dernier à se déplacer dans sa deuxième position de dégagement dans laquelle il permet le passage du fluide de nettoyage le long de l'ensemble d'acheminement tandis que, à contrario, l'invention prévoit que, lorsqu'une quantité prédéfinie de fluide de séchage est admise dans le dispositif d'admission et de distribution de fluides , la pression que ce fluide exerce sur l'élément d'obturation conduise ce dernier à se déplacer dans sa première position dans laquelle il interdit l'acheminement de fluide de nettoyage.

On pourra prévoir que l'élément d'obturation bloque, au moins partiellement, l'admission du fluide qui exerce sur lui la plus faible pression. Et par exemple, dans sa position de dégagement de l'ensemble d'acheminement du fluide de nettoyage, l'élément d'obturation peut être configuré pour bloquer au moins partiellement l'ensemble d'acheminement du fluide de séchage.

Dans tout ce qui suit, les dénominations "amont" et "aval" se réfèreront à la direction d'écoulement des fluides de nettoyage et de séchage dans le dispositif d'admission et de distribution du dispositif de nettoyage selon l'invention. Ainsi, la dénomination "amont" se réfère au côté de celle-ci par lequel ces fluides de nettoyage et de séchage sont admis en son sein, et la dénomination "aval" se réfère au côté de celle-ci par lequel les fluides de nettoyage et de séchage sont distribués à l'extérieur du dispositif, vers la surface du capteur optique considéré. On saura le cas échéant se rapporter à une référence extérieure et intérieure par rapport au corps du dispositif d'admission et de distribution.

Selon la revendication indépendante 3, le dispositif d'admission et de distribution de fluides comprend un corps creux d'admission respectivement du fluide de nettoyage et du fluide de séchage, une tige de distribution de ces fluides logée à l'intérieur du corps creux, et comportant des orifices de distribution des fluides de séchage et de nettoyage, et un chapeau d'admission, rendu solidaire d'un fond amont délimitant une extrémité du corps creux. Et l'élément d'obturation peut être dans ce cas inséré entre le chapeau d'admission et le fond amont.

On peut prévoir que les embouts d'admission soient portés par des éléments distincts, avec au moins un embout d'admission porté par le chapeau d'admission.

Dans le dispositif de nettoyage selon l'invention, la tige de distribution peut être montée mobile relativement au corps creux, et le dispositif peut de la sorte comporter des moyens de déplacement de la tige de distribution entre une position de repos et une position déployée. Ces moyens de déplacement de la tige de distribution peuvent notamment comprendre des moyens communs avec les ensembles d'acheminement d'un des fluides, c'est-à-dire que la circulation d'au moins un fluide à travers le dispositif d'admission et de distribution participe à faire déplacer la tige de distribution à l'intérieur du corps creux. Et ces moyens de déplacement de la tige de distribution peuvent comprendre un élément de rappel élastique en position de la tige.

Le corps creux peut présenter une forme générale sensiblement cylindrique, et il peut être réalisé en deux parties reliées entre elles par une bague de fermeture. On peut prévoir que le corps creux est constitué d'une partie amont, formée d'une paroi périphérique et d'un fond amont, d'une partie aval, formée d'une paroi périphérique et d'un fond aval, et d'une bague de fermeture qui assure la liaison entre partie amont et partie aval. Paroi périphérique de la partie amont du corps creux et paroi périphérique de la partie aval du corps creux peuvent alors être toutes deux de forme sensiblement cylindrique et présenter des diamètres intérieurs et extérieurs, ainsi que dimensions axiales, sensiblement identiques.

La bague de fermeture peut être configurée pour accueillir en appui les parois périphériques des parties amont et aval du corps creux, et elle peut comporter un premier et un deuxième manchons formant moyens de guidage des parties amont et aval du corps creux lors de l'assemblage de ce dernier. Lors de l'assemblage du corps creux, partie amont et partie aval de ce dernier sont ainsi emboîtées respectivement sur le premier manchon et sur le deuxième manchon. Partie amont, partie aval, et bague de fermeture du corps creux délimitent ainsi une cavité qui forme l'intérieur du corps creux.

Le dispositif peut comporter des moyens d'étanchéité de cette cavité vis-à-vis de l'extérieur du dispositif selon l'invention, qui prennent notamment la forme de deux joint toriques insérés chacun dans une gorge agencée à cet effet respectivement en périphérie de la paroi intérieure du fond amont et en périphérie de la paroi intérieure du fond aval.

Le fond amont obture la cavité du corps creux vers l'amont, sensiblement perpendiculairement à la paroi périphérique de la partie amont de celui-ci. A partir du fond amont peut s'étendre un embout d'admission du fluide de nettoyage, à l'opposé de la cavité formant l'intérieur du corps creux. Cet embout peut présenter une forme sensiblement cylindrique et être traversé percé de part en part d'un canal d'admission du fluide correspondant, et il peut s'étendre selon un axe sensiblement parallèle au fond amont.

Le fond amont délimitant une extrémité du corps creux peut porter ainsi un embout d'admission du fluide de nettoyage, percé d'un canal d'admission du fluide de nettoyage, tandis que l'embout d'admission du fluide de séchage, percé d'un canal d'admission du fluide de séchage, est porté par le chapeau d'admission, rendu solidaire de ce fond amont. Tel que précisé, l'élément d'obturation peut alors être inséré entre le chapeau d'admission et le fond amont, et donc entre ces deux canaux d'admission de fluides.

Le fond amont est également percé d'un orifice d'admission du fluide de nettoyage, traversant. Cet orifice d'admission est traversant la paroi du fond amont et met ainsi en communication la cavité du corps creux et la partie amont du fond amont. Selon l'invention, la paroi de l'orifice d'admission se prolonge, vers l'amont, en un tube d'admission. Ce tube d'admission et le canal d'admission du fluide de nettoyage peuvent être définis et agencés de telle manière que ledit tube d'admission forme un obstacle à l'extrémité aval dudit canal d'admission, sans toutefois obturer totalement celui-ci. En d'autres termes, le tube d'admission et le canal d'admission du fluide de nettoyage sont disposés successivement dans l'ensemble d'acheminement de fluide de nettoyage, l'élément d'obturation étant configuré pour bloquer la circulation de l'un vers l'autre dans la première position d'obturation.

Par ailleurs, le tube d'admission et le canal d'admission du fluide de séchage peuvent être coaxiaux, ou sensiblement coaxiaux, et l'élément d'obturation peut dans ce cas être disposé sensiblement perpendiculairement aux axes d'allongement respectifs du tube d'admission et du canal d'admission du fluide de séchage.

Selon une autre caractéristique de l'invention, le fond amont comporte, s'étendant en direction de l'aval à partir de sa face intérieure, un tube d'acheminement percé de part en part, de l'amont vers l'aval, d'un canal d'acheminement. Une gorge périphérique peut être agencée dans la paroi extérieure du tube d'acheminement, au voisinage de l'extrémité aval de celui-ci, pour accueillir un joint d'étanchéité.

Selon une série de caractéristiques, prises seules ou en combinaison, et notamment relatives à un agencement de l'espace agencé entre le chapeau et le fond amont, on pourra prévoir que :
- le chapeau d'admission comporte des moyens aptes à coopérer avec le fond amont pour permettre l'emboîtement dudit chapeau d'admission avec celui-ci, de telle manière que, lorsqu'il est engagé et bloqué avec ledit fond amont par lesdits moyens de coopération, il délimite, avec ledit fond amont, un volume d'admission dans lequel débouchent le canal d'admission du fluide de nettoyage, le canal d'admission du fluide de séchage, le tube d'admission et le canal d'acheminement ;
- le fond amont comporte, s'étendant en direction de l'amont, une paroi de compartimentation qui partage le volume disposé entre le fond amont et le chapeau en deux chambres d'admission de volumes distincts ;
- la paroi de compartimentation est agencée transversalement, sur le fond amont, entre le tube d'acheminement et le tube d'admission ; par transversalement, on entend la direction perpendiculaire à la direction d'extension longitudinale du dispositif et notamment perpendiculaire à la direction de déplacement de la tige de distribution ;

- la dimension axiale de la paroi de compartimentation est supérieure à celle du tube d'admission ;
- l'élément d'obturation est disposé en appui sur un épaulement agencé sur le fond amont ;
- l'épaulement comporte une partie agencée à l'extrémité amont de la paroi d'appui et une partie agencée dans la paroi de l'embout d'admission du fluide de séchage, à proximité de l'extrémité aval de celui-ci ;
- l'élément d'obturation est fixé sur les parois délimitant la première chambre ;
- l'élément d'obturation est fixé au niveau de sa portion périphérique, la portion mobile de l'élément d'obturation étant sa partie centrale ;
- l'élément d'obturation repose sur la face d'extrémité amont du tube d'admission dans la position d'obturation, de manière à bloquer le fluide de nettoyage de part et d'autre de la membrane, dans la chambre et dans le tube d'admission ;
- le canal d'admission du fluide de séchage débouche dans la première chambre, contre l'élément d'obturation, un passage entre la première chambre et la deuxième chambre étant ménagé entre l'extrémité aval de la paroi de compartimentation et le chapeau d'admission ;
- le tube d'acheminement et son canal d'acheminement s'étendent depuis la deuxième chambre d'admission ;
- le fond aval du corps creux est percé d'un orifice dont les parois se prolongent, d'une part vers l'amont, au sein du corps creux et, d'autre part, vers l'aval, à l'extérieur du corps creux, par un manchon ;
- les dimensions de la tige de distribution sont définies de telle manière qu'il puisse coulisser librement au sein du manchon tout en restant axialement aligné avec celui-ci.

Selon un mode de mise en oeuvre particulier de l'invention, la tige de distribution est percée de part en part d'amont en aval de deux canaux distincts, sensiblement parallèles. Parmi ces canaux, on peut distinguer un canal de distribution du fluide de nettoyage et un canal de distribution du fluide de séchage, qui débouchent chacun, à l'extrémité aval de la tige de distribution, en un ou plusieurs orifices de distribution, respectivement du fluide de nettoyage et du fluide de séchage.

Dans ce contexte, un doigt s'étend à partir de la face intérieure du fond amont et dans la direction aval. Le doigt est transversalement agencé, sur le fond amont, entre le tube d'acheminement et le tube d'admission. Une gorge périphérique peut être agencée dans la paroi extérieure du doigt, au voisinage de l'extrémité aval de celui-ci, pour accueillir un joint d'étanchéité. Et le doigt peut former, en son extrémité aval, un appendice terminal de diamètre légèrement inférieur.

Le canal de distribution du fluide de nettoyage et le canal de distribution du fluide de séchage sont transversalement agencés, au sein de la tige de distribution, de telle manière que le tube d'acheminement et le doigt puissent simultanément être engagés respectivement dans ledit canal de distribution du fluide de séchage et dans ledit canal de distribution du fluide de nettoyage lors de l'assemblage du dispositif d'admission et de distribution.

Selon une caractéristique de l'invention, de l'extrémité amont de la tige de distribution vers son extrémité aval, le canal de distribution du fluide de nettoyage comporte au moins une portion amont, une portion intermédiaire, dont le diamètre est légèrement inférieur à celui de la portion amont, et une portion aval, dont le diamètre est inférieur à celui de la portion intermédiaire, et il est notable que dans ce contexte ces diamètres ainsi que le diamètre extérieur du doigt et les dimensions d'un joint d'étanchéité agencé sur le pourtour de ce doigt au voisinage de son extrémité aval sont définis pour que ledit doigt puisse coulisser de manière étanche au sein de la portion intermédiaire du canal de distribution du fluide de nettoyage et laisser passage au fluide de nettoyage lorsque le joint est au sein de la portion amont.

Par ailleurs, de l'extrémité amont de la tige de distribution vers son extrémité aval, le canal de distribution du fluide de séchage peut présenter au moins une portion amont et une portion aval dont le diamètre est inférieur à celui de la portion amont, et ces diamètres ainsi que le diamètre extérieur du tube d'acheminement et les dimensions d'un joint d'étanchéité agencé sur le pourtour de ce tube d'acheminement au voisinage de son extrémité aval sont définis pour que le tube d'acheminement puisse coulisser de manière étanche au sein de la portion amont du canal de distribution du fluide de séchage.

Le chapeau d'admission est destiné à être emboîté avec le fond amont, en amont de celui-ci. Selon l'invention, le chapeau d'admission comporte, s'étendant en direction de l'amont, un embout d'admission du fluide de séchage avantageusement percé de part en part, de l'amont vers l'aval, d'un canal d'admission du fluide de séchage. De forme complexe, le chapeau d'admission comporte des moyens aptes à coopérer avec le fond amont du corps creux pour permettre l'emboîtement dudit chapeau d'admission avec celui-ci. Selon un mode de réalisation préféré de l'invention, ces moyens de coopération comprennent un épaulement apte à être engagé avec la lèvre précédemment citée agencée sur le fond amont, et une gorge apte à accueillir une lèvre complémentaire agencée sur la paroi périphérique de l'embout d'admission du fluide de nettoyage. Lorsqu'il est engagé et bloqué avec le fond amont par ces moyens de coopération, le chapeau d'admission délimite, avec ledit fond amont, un volume d'admission dans lequel débouchent le canal d'admission du fluide de nettoyage, le canal d'admission du fluide de séchage, le tube d'admission et le canal d'acheminement définis précédemment. Il est à noter que, selon un mode de réalisation préféré de l'invention, les canaux d'admission des fluides de nettoyage et de séchage se trouvent, lorsque le chapeau d'admission est mis en place sur le fond amont, sensiblement perpendiculaires entre eux et agencés sensiblement du même côté du dispositif d'admission et de distribution de fluides, à proximité l'un de l'autre.

Selon un deuxième mode de mise en oeuvre, on peut prévoir que la tige de distribution est percée de part en part, d'amont en aval, d'un canal unique de distribution des fluides de nettoyage et de séchage, qui débouche, à l'extrémité aval de ladite tige de distribution, en un ou plusieurs orifices de distribution communs au fluide de nettoyage et au fluide de séchage. Dans ce mode de mise en oeuvre, le canal d'acheminement et le canal unique de distribution sont coaxiaux.

Selon une autre série de caractéristiques, pouvant être appliquées seules ou en combinaison, et dans l'un ou l'autre des modes de mise en oeuvre présentés, on pourra prévoir que :
- la tige de distribution comporte, au voisinage de son extrémité amont, une couronne ;
- l'élément de rappel élastique prend appui contre une face de la couronne ;
- une gorge périphérique est agencée dans la paroi extérieure de la couronne, pour accueillir un joint d'étanchéité, de telle manière que la tige de distribution, équipée dudit joint, puisse coulisser de manière étanche au sein du corps creux.

Selon un mode de réalisation de l'invention, l'élément d'obturation peut consister en une membrane déformable.

L'invention concerne également un véhicule automobile équipé d'un système de détection optique, comprenant notamment un capteur optique, et équipé d'un dispositif de nettoyage tel que décrit précédemment.

L'invention permet ainsi, par la simple mise en place de la membrane précitée, de réaliser l'admission et la distribution alternées d'un fluide de nettoyage ou d'un fluide de séchage par le dispositif d'admission et de distribution, simplifiant ainsi l'architecture globale d'un dispositif de nettoyage d'un capteur optique d'un système de détection optique du véhicule automobile considéré. De plus, par l'agencement qui vient d'être décrit, l'invention évite en toutes circonstances tout contact entre fluide de nettoyage et fluide de séchage : il en résulte une meilleure efficacité du nettoyage du capteur considéré, tout risque de présence résiduelle de fluide de nettoyage dans le fluide de séchage étant écarté.

D'autres caractéristiques, détails et avantages de l'invention et de son fonctionnement ressortiront plus clairement à la lecture de la description donnée ci-après à titre indicatif, en relation avec les figures annexées, dans lesquelles :
- la figure 1 est une vue schématique en perspective d'un capteur d'un système de détection optique et d'un dispositif de nettoyage associé ;
- la figure 2 est une vue schématique en coupe d'un dispositif d'admission et de distribution d'un dispositif de nettoyage selon un premier mode de réalisation de l'invention, dans laquelle les canaux de distribution du fluide de nettoyage et du fluide de séchage sont distincts, parallèles entre eux, le dispositif d'admission étant ici configuré avec un élément d'obturation d'un ensemble d'acheminement de fluide de nettoyage en position de dégagement ;
- la figure 3 est une vue similaire à celle de la figure 2, avec l'élément d'obturation d'un ensemble d'acheminement de fluide de nettoyage en position d'obturation ;
- la figure 4 est une représentation de l'architecture hydraulique d'un dispositif de nettoyage selon l'invention ; et
- la figure 5 est une vue schématique en coupe d'un dispositif d'admission et de distribution d'un dispositif de nettoyage selon un deuxième mode de réalisation de l'invention, dans laquelle les canaux de distribution du fluide de nettoyage et du fluide de séchage forment un seul et même canal de distribution, le dispositif d'admission étant ici configuré avec un élément d'obturation d'un ensemble d'acheminement de fluide de nettoyage en position de dégagement.

Il est tout d'abord à noter que si les figures exposent l'invention de manière détaillée pour sa mise en oeuvre, elles peuvent bien entendu servir à mieux définir l'invention le cas échéant.

Il est également rappelé que, dans la description qui suit, les dénominations "amont" et "aval" se réfèrent à la direction d'écoulement des fluides de nettoyage et de séchage dans le dispositif de nettoyage selon l'invention. Ainsi, la dénomination "amont" se réfère au côté du dispositif selon l'invention par lequel ces fluides de nettoyage et de séchage sont admis en son sein, et la dénomination "aval" se réfère au côté du dispositif selon l'invention par lequel les fluides de nettoyage et de séchage sont distribués à l'extérieur de celui-ci, vers une surface d'un capteur optique d'un système de détection optique d'un véhicule automobile.

Par ailleurs, dans la description détaillée qui va suivre de plusieurs modes de réalisation d'un dispositif de nettoyage, les éléments similaires d'un mode de réalisation à l'autre seront identifiés par les mêmes repères sur les différentes figures.

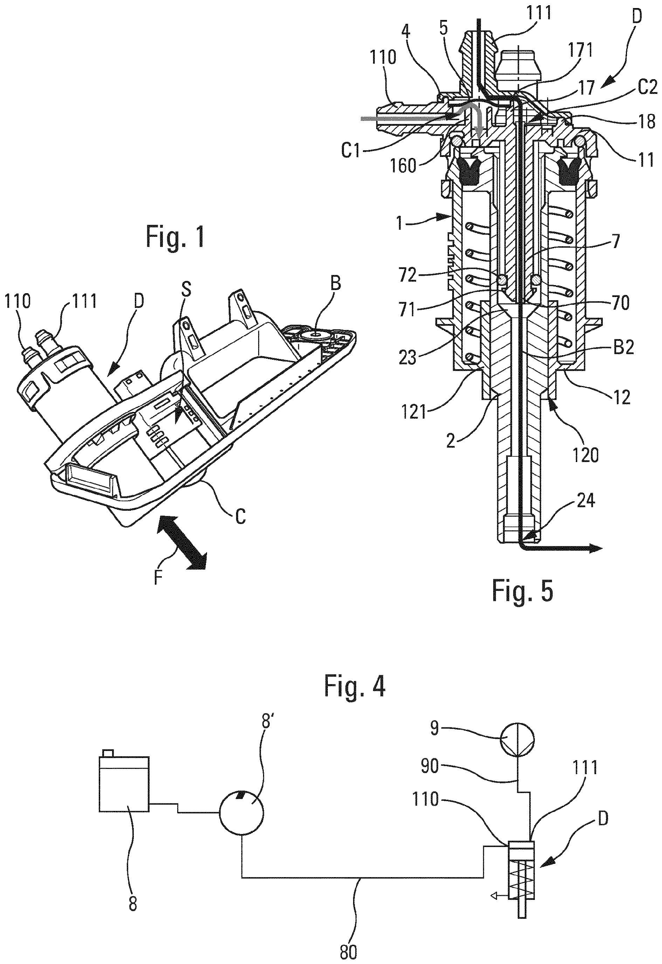

Sur la figure 1, on a illustré un dispositif de nettoyage selon l'invention, c'est-à-dire un dispositif de nettoyage d'un capteur optique C, faisant partie d'un système de détection optique S pour véhicule automobile, le dispositif de nettoyage comprenant au moins un dispositif d'admission et de distribution de fluides D dans lequel sont admis sélectivement un fluide de nettoyage et un fluide de séchage à travers deux ensembles d'acheminement distincts depuis un embout d'admission 110, 111 propre à chaque fluide. Le dispositif d'admission et de distribution de fluides D est mobile en translation dans la direction illustrée par la flèche F, entre une position déployée où des orifices de distribution sont disposés en regard du capteur optique, et une position escamotée (visible sur la figure 1) où le dispositif d'admission et de distribution de fluides est rétracté à l'intérieur d'un boîtier de structure de carrosserie B du véhicule pour d'une part le protéger et d'autre part ne pas gêner la détection optique du capteur.

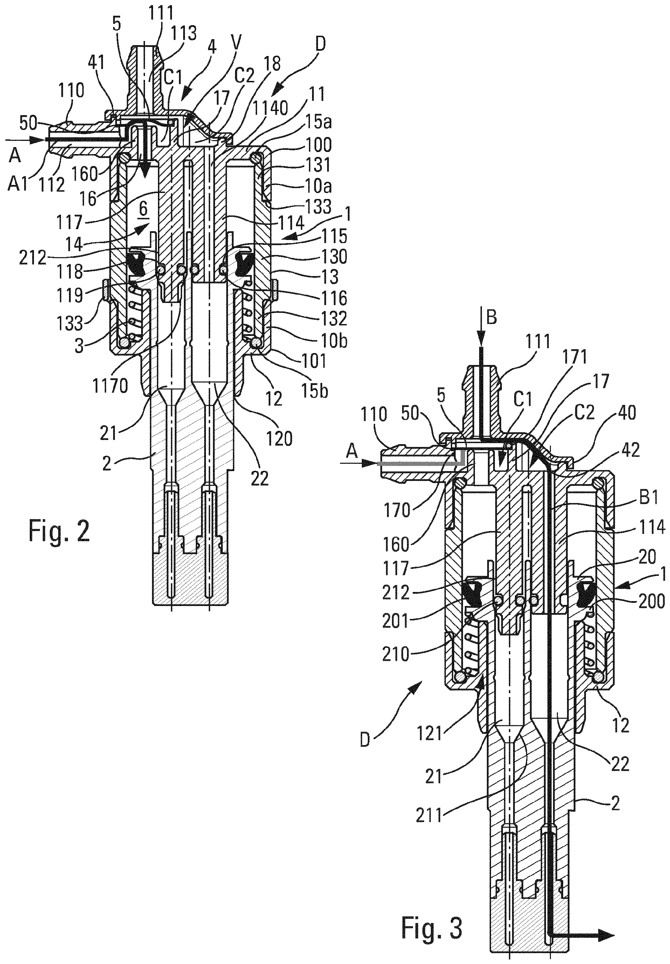

Tel qu'illustré sur les figures 2 et 3, un dispositif d'admission et de distribution D d'un dispositif de nettoyage selon l'invention comporte au moins un corps creux 1 d'admission respectivement d'un fluide de nettoyage et d'un fluide de séchage, une tige 2 de distribution de ces fluides, et un élément de rappel élastique du type ressort 3 et un chapeau d'admission 4. La tige est amenée à coulisser à l'intérieur du corps creux, entraînée en translation entre deux positions extrêmes du fait de l'effort de rappel élastique du ressort d'une part et de la pression d'un fluide participant au nettoyage et/ou au séchage et passant par le corps creux avant de sortir du dispositif d'admission et de distribution.

Dans l'exemple illustré par la figure 2, le corps creux 1 a une forme générale sensiblement cylindrique, et il comporte deux parties reliées entre elles par une bague de fermeture 13. Plus précisément, le corps creux 1 est constitué d'une partie amont 100, formée d'une paroi périphérique 10a et d'un fond amont 11, d'une partie aval 101, formée d'une paroi périphérique 10b et d'un fond aval 12, et d'une bague de fermeture 13 qui assure la liaison entre partie amont 100 et partie aval 101. Paroi périphérique 10a de la partie amont 100 du corps creux 1 et paroi périphérique 10b de la partie aval 101 du corps creux 1 sont toutes deux de forme sensiblement cylindrique et présentent des diamètres intérieurs et extérieurs, ainsi que dimensions axiales, sensiblement identiques.

Selon ce même mode de réalisation, la bague de fermeture 13 a une forme sensiblement cylindrique et comporte, selon la direction de son axe de révolution, une partie centrale 130 qui se prolonge, vers l'amont, par un manchon amont 131 de même diamètre intérieur que la partie centrale 130 et de diamètre extérieur légèrement inférieur à celui de cette dernière, et, vers l'aval, par un manchon aval 132, de même diamètre intérieur que la partie centrale 130 et de diamètre extérieur légèrement inférieur à celui de cette dernière. Le diamètre extérieur de la partie centrale 130 de la bague de fermeture 13 est sensiblement égal au diamètre extérieur des parois périphériques, respectivement 10a et 10b, des parties amont et aval, respectivement 100 et 101, du corps creux 1. De même, les diamètres extérieurs du manchon amont 131 et du manchon aval 132 sont avantageusement identiques, et ils sont très légèrement inférieurs aux diamètres intérieurs des parois périphériques, respectivement 10a et 10b, des parties amont et aval, respectivement 100 et 101, du corps creux 1. Axialement, les dimensions, respectivement, du manchon amont 131 et du manchon aval 132 de la bague de fermeture 13, sont sensiblement égales aux dimensions axiales intérieures des parois périphériques, respectivement 10a et 10b, des parties amont et aval du corps creux 1. Ainsi, les épaulements 133 constitués à l'intersection de la paroi extérieure de la partie centrale 130 de la bague de fermeture 13 et des parois extérieures du manchon amont 131 et du manchon aval 132 de cette même bague de fermeture, forment, lors de l'assemblage du corps creux 1, des surfaces d'appui pour les extrémités des parois périphériques, respectivement 10a et 10b, des parties amont et aval du corps creux 1. Lors de l'assemblage du corps creux 1, partie amont et partie aval de ce dernier sont ainsi emboîtées respectivement sur le manchon amont 131 et sur le manchon aval 132 qui réalisent alors une forme de guidage des parois périphériques des parties amont et aval du corps creux 1 dans cet emboîtement.

Partie amont 100, partie aval 101, et bague de fermeture 13 du corps creux 1 délimitent ainsi une cavité 14 qui forme l'intérieur du corps creux 1. Des moyens d'étanchéité de cette cavité 14 vis-à-vis de l'extérieur du dispositif selon l'invention peuvent être insérés entre la bague de fermeture 13 et, respectivement, la partie amont 100 et la partie aval 101 du corps creux 1, et ces moyens d'étanchéité peuvent notamment prendre la forme de deux joint toriques, respectivement 15a et 15b, insérés chacun dans une gorge agencée à cet effet respectivement en périphérie de la face interne du fond amont 11 et en périphérie de la face interne du fond aval 12.

Lors de l'assemblage du corps creux 1, l'extrémité du manchon amont 131 et l'extrémité du manchon aval 132 de la bague de fermeture 13 viennent en appui sur ces joints toriques, fermant ainsi la cavité 14 du corps creux de manière étanche. Cette fermeture peut être renforcée par des moyens supplémentaires de blocage de la bague de fermeture 13 avec les parties amont et aval du corps creux, par exemple des vis, non représentés sur la figure 2, et insérés radialement entre paroi périphérique 10a de la partie amont du corps creux et premier manchon 131 de la bague de fermeture, d'une part, et/ou entre paroi périphérique 10b de la partie aval du corps creux et deuxième manchon 132 de la bague de fermeture, d'autre part.

Le fond amont 11 obture la cavité 14 et le corps creux 1 vers l'amont, sensiblement perpendiculairement à la paroi périphérique 10a de la partie amont 100 dudit corps creux 1.

Un embout d'admission 110 du fluide de nettoyage s'étend radialement à partir du fond amont 11. Dans le cas illustré par la figure 2, cet embout a une forme sensiblement cylindrique, et il s'étend sensiblement parallèlement au fond amont 11. Selon l'invention, l'embout d'admission 110 du fluide de nettoyage est percé de part en part, de l'amont vers l'aval, d'un canal 112 d'admission du fluide de nettoyage, l'extrémité amont de ce canal étant configuré pour être raccordé à une conduite d'alimentation de fluide de nettoyage raccordée par ailleurs à un réservoir de stockage de fluide de nettoyage, ici non représentée. L'extrémité aval du canal 112 d'admission du fluide de nettoyage débouche sur un circuit d'alimentation comportant au moins une chicane agencée sur la face externe du fond amont 11, c'est-à-dire la face tournée vers l'extérieur du corps creux 1.

Le fond amont 11 est également percé d'un orifice d'admission 16 du fluide de nettoyage mettant en communication la cavité 14 du corps creux 1 et le circuit d'alimentation agencé sur la face externe du fond amont. La paroi délimitant l'orifice d'admission 16 se prolonge, en saillie de la face externe du fond amont 11, en un tube d'admission 160, qui participe à former chicane du circuit d'alimentation. On comprend, notamment à la lecture de la figure 2, que le tube d'admission 160 et le canal 112 d'admission du fluide de nettoyage sont définis et agencés de telle manière que ledit tube d'admission forme un obstacle à l'extrémité aval dudit canal d'admission, sans toutefois obturer totalement celui-ci.

Par ailleurs, le fond amont 11 comporte, s'étendant en direction de l'aval à partir de sa face interne, un tube d'acheminement 114 percé de part en part, de l'amont vers l'aval, d'un canal d'acheminement 1140. Le tube d'acheminement 114 s'étend à l'intérieur du corps creux 1, en étant au moins partiellement dans un conduit ménagé dans la tige 2 dans lequel le canal d'acheminement 1140 débouche. Une gorge périphérique 115 est agencée dans la paroi extérieure du tube d'acheminement 114, au voisinage de l'extrémité aval de celui-ci, pour accueillir un joint d'étanchéité 116, par exemple un joint torique dont le rôle sera précisé plus loin.

Parallèlement, ou sensiblement parallèlement, au tube d'acheminement 114, un doigt 117, avantageusement sensiblement cylindrique, s'étend également à partir de la face intérieure du fond amont 11 et dans la direction aval. Le doigt 117 est agencé, sur le fond amont 11, sensiblement entre le tube d'acheminement 114 et l'orifice d'admission 16. Avantageusement, l'axe de révolution du doigt 117 est sensiblement parallèle à l'axe du tube d'acheminement 114, et à celui du tube d'admission 160.

Une gorge périphérique 118 est agencée dans la paroi extérieure du doigt 117, au voisinage de l'extrémité aval de celui-ci, pour accueillir un joint d'étanchéité 119, par exemple un joint torique, dont le rôle sera précisé plus loin.

Dans l'exemple de réalisation illustré, la longueur du doigt 117, c'est-à-dire la distance sur laquelle il s'étend depuis le fond amont 11, est légèrement supérieure à la longueur du tube d'acheminement 114. Et notamment, la partie d'extrémité aval du doigt 117, qui s'étend au-delà de la partie d'extrémité aval du tube 114, est légèrement réduite. En d'autres termes, le doigt 117 comporte, à son extrémité aval, un appendice terminal 1170 de plus petit diamètre.

Le fond amont 11 comporte également une paroi de compartimentation 17, qui s'étend en saillie de la paroi de fond amont 11, perpendiculairement à celle-ci et en direction de l'amont, et dont la dimension axiale est légèrement supérieure à celle du tube d'admission 160. Dans l'exemple illustré, la paroi de compartimentation 17 est transversalement agencée, sur le fond amont 11, entre le tube d'acheminement 114 et le tube d'admission 160. Enfin, le fond amont 11 comporte avantageusement, s'étendant vers l'amont, une lèvre 18, agencée de telle manière que le tube d'acheminement 114 et son canal d'acheminement 1140 soient transversalement agencés entre ladite lèvre 18 et la paroi de compartimentation 17 sur ledit fond amont 11.

Tel que cela a été présenté précédemment, un chapeau d'admission 4 est disposé en recouvrement au moins partielle du fond amont 11, de manière à participer à délimiter des conduits de circulation de fluide, aussi bien fluide de nettoyage que fluide séchage, activables sélectivement selon des moyens de mises en oeuvre qui vont être détaillés ci-après.

Le chapeau d'admission est destiné à être rendu solidaire du fond amont 11, en amont de celui-ci. Dans l'exemple illustré, le chapeau 4 est emmanché à force sur le corps creux 1 avec une collerette périphérique formant logement pour la lèvre 18 précédemment citée, et une gorge 41 apte à accueillir une lèvre complémentaire agencée sur la paroi périphérique de l'embout 110 d'admission du fluide de nettoyage.

Le chapeau d'admission 4 comporte, s'étendant en direction de l'amont, un embout 111 d'admission du fluide de séchage percé de part en part, de l'amont vers l'aval, d'un canal 113 d'admission du fluide de séchage. Lorsqu'il est rendu solidaire du fond amont 11, le chapeau d'admission 4 délimite, avec ledit fond amont 11, un volume d'admission V dans lequel débouchent, comme le montrent les figures, le canal 112 d'admission du fluide de nettoyage, le canal 113 d'admission du fluide de séchage, le tube d'admission 160 et le canal d'acheminement 1140 définis précédemment.

Tel qu'illustré, les canaux d'admission des fluides de nettoyage et de séchage, respectivement 112 et 113, ainsi que le tube d'admission 160, se trouvent, lorsque le chapeau d'admission 4 est mis en place sur le fond amont 11, du même côté du dispositif d'admission et de distribution D par rapport à la paroi de compartimentation 17, à proximité l'un de l'autre.

Plus particulièrement, le volume d'admission V est compartimenté en une première chambre d'admission C1 et une deuxième chambre d'admission C2, agencées de part et d'autre de la paroi de compartimentation 17.

La première chambre d'admission C1 est disposée en sortie du canal 112 d'admission du fluide de nettoyage et du canal 113 d'admission du fluide de séchage et le tube d'admission 160 s'étend au milieu de cette première chambre d'admission C1, en saillie du fond amont 11 qui forme la paroi de fond de cette première chambre.

La deuxième chambre d'admission C2 est disposée de l'autre côté de la paroi de compartimentation 17 par rapport à la première chambre d'admission C1, et la paroi de fond de cette deuxième chambre, formé par le fond amont, est ouverte par une extrémité amont du canal d'acheminement 1140.

La hauteur de la paroi de compartimentation 17, c'est-à-dire sa dimension axiale à distance du fond amont 11, ainsi que les dimensions et formes de la paroi intérieure 42 du chapeau d'admission 4 sont définies de telle manière que, lors de l'emboîtement dudit chapeau d'admission sur le fond amont 11, un espace 171 de faible dimension subsiste entre l'extrémité amont de ladite paroi de compartimentation et ladite paroi intérieure.

Selon l'invention, une membrane 5 est disposée dans le volume d'admission V de manière à être mobile entre deux positions parmi lesquelles une première position d'obturation du tube d'admission et une deuxième position de dégagement. De la sorte, la membrane 5 forme un élément d'obturation d'au moins l'ensemble d'acheminement du fluide de nettoyage, tel que cela va être précisé ci-après. Notamment, dans le cas illustré sur les figures, la membrane 5 est insérée en travers de la première chambre d'admission C1 en étant sensiblement perpendiculaire à l'axe du canal 113 d'admission du fluide de séchage. La membrane 5 est fixée à sa périphérie 50 sur les parois délimitant cette première chambre d'admission C1, et notamment la paroi de compartimentation 17 et une paroi de l'embout 110 d'admission du fluide de séchage, à proximité de l'extrémité aval de celui-ci. Dans l'exemple illustré, la membrane repose au niveau de sa périphérie 50 sur des épaulements 170 ménagés dans ces parois.

Avantageusement, la membrane 5 se trouve ainsi à la fois au regard du canal 113 d'admission du fluide de séchage et du tube d'admission 160 du fond amont 11. On décrira ci-après le fonctionnement de la membrane selon l'alimentation en fluide de nettoyage et en fluide de séchage. Il convient toutefois de noter à ce stade que, de par son agencement en travers de la première chambre d'admission C1, la membrane 5 interdit à la fois toute admission de fluide de séchage au sein de la première chambre d'admission C1, et tout passage du fluide de nettoyage vers la deuxième chambre d'admission C2.

Sans sortir du contexte de l'invention, on pourrait prévoir que l'élément d'obturation prenne la forme d'une cloison mobile différente de la membrane 5 telle qu'elle est ici illustrée, dès lors qu'il joue le rôle de vanne permettant de contrôler l'acheminement de tel ou tel fluide dans le dispositif d'admission et de distribution du dispositif de nettoyage selon l'invention.

Le fond aval 12 du corps creux 1 est percé d'un orifice 120 dont les parois se prolongent, d'une part vers l'amont, au sein de la cavité 14 du corps creux et, d'autre part, vers l'aval, à l'extérieur du corps creux 1, par un manchon 121, dont le diamètre extérieur est défini en relation avec le ressort 3 pour que ce dernier puisse être inséré autour dudit manchon dans la cavité 14. Les autres formes et dimensions du manchon 121 seront détaillées plus loin.

On va maintenant décrire plus en détails la tige 2 de distribution des fluides de nettoyage et de séchage.

Dans l'exemple plus particulièrement illustré par les figures, la tige 2 de distribution est de forme sensiblement cylindrique, et son diamètre extérieur est légèrement inférieur au diamètre intérieur du manchon 121 de la partie aval 101 du corps creux 1, de telle manière qu'elle puisse coulisser librement au sein dudit manchon tout en restant axialement alignée avec celui-ci. Selon l'invention, la tige de distribution 2 comporte, au voisinage de son extrémité amont, une couronne 20 formant saillie sur le pourtour de la tige de distribution 2.

La tige de distribution 2 est percée, d'amont en aval, par deux canaux distincts, à savoir un canal de distribution 21 du fluide de nettoyage et un canal de distribution 22 du fluide de séchage. Canal 21 de distribution du fluide de nettoyage et canal 22 de distribution du fluide de séchage débouchent chacun, à l'extrémité aval de la tige de distribution 2, en un ou plusieurs orifices de distribution, distincts, non représentés sur les figures. En d'autres termes, un premier canal dans la tige est spécifiquement dédié à la circulation du fluide de nettoyage, et le fluide projeté pour le nettoyage du capteur optique sort d'un ou de plusieurs orifices de distribution ménagés sur ce premier canal, tandis qu'un deuxième canal, agencé à côté du premier canal dans la tige et distinct de celui-ci, est spécifiquement dédié à la circulation du fluide de séchage, et le fluide projeté pour le séchage du capteur sort d'un ou de plusieurs orifices de distribution ménagés spécifiquement sur ce deuxième canal.

Avantageusement, le canal 21 de distribution du fluide de nettoyage et le canal 22 de distribution du fluide de séchage sont parallèles et agencés, dans la tige de distribution 2, avec un espacement sensiblement identique à celui qui sépare le tube d'acheminement 114 du doigt 117 dans le corps creux 1. En d'autres termes, corps creux 1 et tige 2 du dispositif selon l'invention sont respectivement configurés pour que le tube d'acheminement 114 et le doigt 117 puissent simultanément être engagés respectivement dans le canal 22 de distribution du fluide de séchage et dans le canal 21 de distribution du fluide de nettoyage lors de l'assemblage du dispositif d'admission et de distribution D.

On forme de la sorte deux ensembles d'acheminent distincts des fluides de nettoyage et de séchage. Un ensemble d'acheminement du fluide de séchage consiste en l'agencement successif de l'embout d'admission 111 et du canal d'admission 113, du tube d'acheminement 114, percés respectivement par un canal d'admission 113, 1140, et du canal de distribution 22 réalisé spécifiquement dans la tige 2 et dans lequel le tube d'acheminement 114 débouche. Le fluide de séchage passe de l'embout d'admission 111 à la deuxième chambre d'admission C2 par le passage 171 agencé entre la paroi de compartimentation 17 et le chapeau 4, puis de cette deuxième chambre d'admission au canal de distribution 22 du fluide de séchage via le tube d'acheminement 114. Par ailleurs, l'ensemble d'acheminement du fluide de nettoyage consiste en la succession de l'embout d'admission 110 et du canal d'admission 112, du tube d'admission 160, de la cavité 14 du corps creux 1 entre le fond amont 11 et la couronne 20 de la tige, et du canal de distribution 21 réalisé spécifiquement dans la tige 2 et dans lequel le doigt 117 est logé. Le fluide de nettoyage passe ainsi de l'embout d'admission 111 aux orifices de distribution ménagés dans le canal de distribution du fluide de nettoyage, en passant au préalable dans la cavité 14 dans laquelle il est en contact avec l'extérieur de la tige 2. En cela, l'ensemble d'acheminement du fluide de nettoyage fait partie des moyens de déplacement de la tige d'admission puisque le fluide de nettoyage injecté dans la cavité 14, en attente de son passage dans la tige et de sa distribution via les orifices de distribution, pousse sur la tige à l'encontre de l'effort de rappel élastique exercé par le ressort. Les moyens de déplacement sont ainsi constitués du fluide de nettoyage et des moyens de remplissage sous pression de la chambre par ce fluide de nettoyage, et du ressort formant élément de rappel élastique.

On constate que le fluide de séchage circule d'amont en aval du dispositif sans être au contact du fluide de nettoyage et sans contact avec l'extérieur de la tige 2.

De l'extrémité amont de la tige de distribution 2 vers son extrémité aval, le canal 21 de distribution du fluide de nettoyage présente, dans le dispositif selon l'invention, au moins une portion amont, une portion intermédiaire, dont le diamètre est légèrement inférieur au diamètre de la portion amont, et une portion aval dont le diamètre est inférieur à la fois à celui de la portion intermédiaire et à celui de la portion amont. Plus précisément, le canal 21 de distribution du fluide de nettoyage forme, à l'intersection entre sa portion amont et sa portion intermédiaire, un premier épaulement 210, et il forme, à l'intersection entre sa portion intermédiaire et sa portion aval, un deuxième épaulement 211. Il est à noter que si l'écart entre le diamètre de la portion amont et celui de la portion intermédiaire du canal de distribution 21 est relativement faible, l'écart entre le diamètre de la portion intermédiaire et celui de la portion aval de ce même canal de distribution 21 est nettement plus important, de telle manière que la portion aval de ce canal de distribution du fluide de nettoyage constitue une zone d'étranglement de ce dernier.

Le diamètre de la portion intermédiaire du canal 21 de distribution du fluide de nettoyage est très légèrement supérieur au diamètre extérieur du doigt 117. Plus précisément, selon l'invention, le diamètre de la portion intermédiaire du canal 21 de distribution du fluide de nettoyage, le diamètre extérieur du doigt 117 du corps creux 1, et les dimensions du joint torique d'étanchéité 119 agencé au voisinage de l'extrémité aval de ce doigt 117 sont définis pour que ledit doigt 117 puisse coulisser de manière étanche au sein de la portion intermédiaire du canal 21 de distribution du fluide de nettoyage.

On comprend qu'il résulte de ce qui précède qu'un espace 212 est ménagé entre d'une part la paroi délimitant la portion amont du canal 21 de distribution du fluide de nettoyage et d'autre part le doigt 117, de sorte que du fluide de nettoyage peut circuler librement dans cet espace entre la cavité 14 et le premier épaulement 210.

Le canal 22 de distribution du fluide de séchage diffère du canal 21 de distribution du fluide de nettoyage, notamment dans l'absence d'un espace ménagé autour du tube d'acheminement 114 suffisant pour laisser s'écouler, le long de ce canal de distribution du fluide de séchage, du fluide de nettoyage provenant de la cavité 14. De l'extrémité amont de la tige de distribution 2 vers son extrémité aval, le canal 22 de distribution du fluide de séchage présente, dans le dispositif selon l'invention, au moins une portion amont et une portion aval dont le diamètre est inférieur à celui de la portion amont. Plus précisément, le canal 22 de distribution du fluide de séchage forme, à l'intersection entre sa portion amont et sa portion aval, un épaulement 220. Il est à noter que l'écart entre le diamètre de la portion amont et celui de la portion aval de ce même canal de distribution est relativement important, et que la portion aval de ce canal de distribution du fluide de séchage constitue une zone d'étranglement de ce dernier.

Le diamètre du canal 22 de distribution du fluide de séchage, en sa portion amont, est très légèrement supérieur au diamètre extérieur du tube d'acheminement 114 qui prolonge l'embout 111 d'admission dudit fluide de séchage. Plus précisément, selon l'invention, le diamètre de la portion amont du canal 22 de distribution du fluide de séchage, le diamètre extérieur du tube d'acheminement 114, et les dimensions du joint torique d'étanchéité 116 agencé au voisinage de l'extrémité aval de ce tube d'acheminement 114 sont définis pour que ce dernier puisse coulisser de manière étanche au sein de la portion amont du canal 22 de distribution du fluide de séchage, de sorte que comme cela a été précisé précédemment, aucun espace de fluide n'est autorisé entre le tube d'acheminement et le canal 22 de distribution du fluide de séchage.

Selon l'invention, la couronne 20 de la tige de distribution 2, située au voisinage de l'extrémité amont de celui-ci, présente un diamètre extérieur légèrement inférieur au diamètre intérieur de la bague 13 de fermeture du corps creux 1, c'est-à-dire, en d'autres termes, au diamètre de la cavité 14 de ce même corps creux 1.

Une gorge périphérique 200 est agencée dans la paroi extérieure de la couronne 20, pour accueillir un joint 201 et, selon l'invention, le diamètre extérieur de la couronne 20 de la tige de distribution 2 et le joint 201 sont définis pour que la tige de distribution 2, équipée de son joint 201, puisse coulisser de manière étanche au sein de la cavité 14 du corps creux 1. Tel qu'illustré, le joint 201 est un joint à lèvre.

L'assemblage du dispositif selon l'invention peut alors être réalisé de la manière suivante.

On assemble dans un premier temps le fond aval 23 et le manchon 13, en comprimant entre les deux pièces le joint torique 15b associé. Le ressort 3 est alors placé autour du manchon 121 du fond aval 12, en appui contre la face intérieure dudit fond aval 12.

La tige de distribution 2, équipée de son joint 201 logé dans la couronne 20, est ensuite insérée dans le manchon 121 de la partie aval 101 du corps creux 1, dans lequel il est, de par son diamètre extérieur et le diamètre intérieur dudit manchon, ajusté à coulisser librement tout en restant axialement aligné avec celui-ci, le joint 201 se trouvant alors mis en compression contre la paroi intérieure de la bague de fermeture 13, de telle manière que la tige de distribution puisse coulisser librement mais de manière étanche au sein de cette dernière. La couronne 20 présente une surface d'appui pour le ressort 3 et son extrémité libre opposée à la paroi de fond amont, et le ressort 3 participe ainsi à la mise en position de la tige 2 par rapport au corps creux 1.

La partie amont 100 du corps creux 1 est ensuite emboîtée sur le premier manchon 131 de la bague de fermeture 13, en appui sur le joint torique d'étanchéité 15a placé dans le fond amont 11. Dans cette opération, et de par les dimensions respectives de ces différents éléments, le doigt 117 et le tube d'acheminement 114 se trouvent simultanément engagés, respectivement, dans le canal 21 de distribution du fluide de nettoyage et dans le canal 22 de distribution du fluide de séchage agencés dans la tige de distribution 2.

La membrane 5 est ensuite placée en appui sur l'épaulement 170 précédemment défini. Selon l'invention, la dimension axiale du tube d'admission 160 est définie pour que, lors de sa mise en place sur l'épaulement 170, la membrane 5 se trouve également en appui sur l'extrémité amont dudit tube d'admission 160 dans une position d'obturation de ce dernier, qui participe alors à former, avec l'épaulement 170, un siège pour cette membrane. La position de repos de la membrane 5, sensiblement plane, correspondant à cette position d'obturation est notamment visible sur la figure 3.

Enfin, le chapeau d'admission 4 est amené en recouvrement de la partie amont 100 pour être emboîté et bloqué sur le fond amont 11 du corps creux 1 par notamment la coopération de la lèvre 18 et de l'épaulement 40 d'une part et de la gorge 41 et de la lèvre complémentaire décrite précédemment. Tel que cela a pu être précisé précédemment, le chapeau d'admission 4 et la paroi de compartimentation 17 sont agencés de sorte qu'un espace 171 est laissé pour permettre le passage d'un fluide, notamment le fluide de séchage, depuis le canal 113 d'admission de fluide de séchage vers la deuxième chambre d'admission C2.

Il résulte de ce qui précède que les positions relatives de la tige de distribution 2 et du corps creux 1 se trouvent, au sein de la cavité 14 de ce même corps creux 1, définies par l'équilibre qui s'établit entre la force de rappel du ressort 3 et la force qui peut s'exercer sur la face amont de la couronne 20 de la tige de distribution 2. En d'autres termes, les positions relatives du doigt 117 et du tube d'acheminement 114 au sein, respectivement, du canal 21 de distribution du fluide de nettoyage et du canal 22 de distribution du fluide de séchage sont également gouvernées par l'équilibre qui s'établira entre la force de rappel du ressort 3 et une force qui s'exercera sur la couronne 20 de la tige de distribution 2. Selon l'intensité de la force qui s'appliquera sur la face amont de la couronne 20 de la tige de distribution 2, ce dernier sera ou non entraîné à coulisser vers l'aval à travers le manchon 121 de la partie aval 101 du corps creux 1, en comprimant ou non le ressort 3. En l'absence de toute force appliquée sur la face amont de la couronne 20 de la tige de distribution 2, cette dernière se trouve ainsi dans une première position extrême, ou position de repos, sensiblement au voisinage du fond amont 11, et dans laquelle le ressort 3 est totalement détendu. A l'inverse, lorsque le ressort 3 est comprimé au maximum, la tige de distribution 2 atteint une deuxième position extrême, ou position de nettoyage, dans laquelle la tige a coulissé au maximum vers l'aval, à travers le manchon 121 de la partie aval du corps creux 1.

Les figures 1 et 2, ainsi que la figure 5 qui sera décrite ci-après, présentent le dispositif selon l'invention avec une tige de distribution 2 dans la position déployée : la pression exercée par le fluide de nettoyage est plus forte que la force de rappel du ressort 3 s'exerçant sur la tige de distribution 2, en la maintenant de la sorte au voisinage de la partie aval du corps creux 1 et en comprimant totalement le ressort 3.

Lorsqu'un fluide de nettoyage est admis, selon la direction représentée par la flèche A, par l'embout 110, il circule dans le canal 112 d'admission jusqu'à l'extrémité aval de ce canal, où il débouche dans la première chambre C1 et où il rencontre l'obstacle que constitue le tube d'admission 160 et qui est à ce stade obturé par la membrane 5. On a illustré en trait continu A1 le trajet du fluide de nettoyage correspondant. La quantité de fluide de nettoyage présente dans cette première chambre progresse et selon l'invention, sous l'effet de la pression de ce fluide de nettoyage, la membrane 5 est poussée de manière à se déformer en son centre, puisque tenue à sa périphérie 50. De la sorte, la membrane prend sa position de dégagement, à distance du tube d'admission 160 de manière à autoriser le passage du fluide de nettoyage au sein de ce dernier. On peut constater que dans cette position de dégagement, la membrane tend à se rapprocher de l'extrémité aval du canal 113 d'admission du fluide de séchage, en l'obturant au moins partiellement. En d'autres termes, sous l'effet de la pression d'admission du fluide de nettoyage, la membrane 5 est repoussée contre l'extrémité aval du canal 113 d'admission du fluide de séchage, qu'elle obture au moins partiellement.

En débouchant au sein du corps creux 1 par l'orifice d'admission 16, le fluide de nettoyage exerce alors, sur la face amont de la couronne 20 de la tige de distribution, une force qui conduit cette tige de distribution à coulisser vers l'aval au sein du corps creux 1 en éloignement de la paroi amont et en comprimant le ressort 3, augmentant ainsi le volume d'une chambre finale d'admission 6 délimitée dans la cavité 14 du corps creux par la paroi intérieure de la bague de fermeture 13, par la face amont de la couronne 20 de la tige de distribution et par la face intérieure du fond amont 11. Le coulissement vers l'aval de la tige de distribution 2 relativement au corps creux 1 entraîne un coulissement relatif du doigt 117 en direction de la portion amont du canal 21 de distribution de fluide de nettoyage au sein de la tige de distribution. Il faut bien comprendre ici que seule la tige de distribution se déplace, et que ce sont uniquement les positions relatives de ses différents composants avec les différents composants du corps creux 1 qui changent.

Les dimensions des différents composants du dispositif selon l'invention sont définies de telle manière que, dans le coulissement relatif du doigt 117 vers la portion amont du canal 21 de distribution du fluide de nettoyage, le joint torique d'étanchéité 119 placé à l'extrémité aval de ce doigt 117 franchit, en direction de l'amont, le premier épaulement 210 défini par l'intersection de la portion amont et de la portion intermédiaire du canal 21 de distribution du fluide de nettoyage, et se trouve ainsi au sein de ladite portion amont dudit canal de distribution. Et puisque le diamètre de cette portion amont est légèrement supérieur à celui de la portion intermédiaire de ce canal de distribution, le coulissement du doigt 117 au sein de ce dernier n'est alors plus étanche. Le fluide de nettoyage peut donc s'écouler jusqu'à la portion aval de ce canal 21 de distribution et ainsi jusqu'aux orifices de distribution correspondants et jusqu'à la surface du capteur optique à nettoyer. Il est à noter ici que la présence de l'appendice 1170, de plus petit diamètre, à l'extrémité du doigt 117 permet une meilleure circulation du fluide de nettoyage en évitant tout effet de "succion" qui pourrait survenir au moment du franchissement, par le joint torique 119, du premier épaulement 210. Le coulissement relatif du doigt 117 dans la portion amont du conduit 21 de distribution du fluide de nettoyage se poursuit jusqu'à ce que l'admission de fluide par l'embout 110 cesse, ou jusqu'à ce que la face aval de la couronne 20 de la tige de distribution se trouve en appui sur l'extrémité amont du manchon 121 du corps creux 1. Dans cette position de nettoyage, la tige de distribution 2 est dans une position extrême déployée en aval du corps creux 1, qui correspond à une position dans laquelle les orifices de distribution respectivement du fluide de nettoyage et du fluide de séchage situés à son extrémité aval sont au plus proche de la surface du capteur optique à nettoyer.

Lorsque l'admission de fluide de nettoyage cesse, la force de rappel du ressort 3 conduit ce dernier à se détendre jusqu'à retrouver sa position initiale, en poussant sur la face aval de la couronne 20, à l'opposé du manchon 121. Dans ce mouvement, la tige de distribution 2 coulisse alors, cette fois, vers l'amont du dispositif selon l'invention, et le volume de la chambre d'admission 4 diminue, celle-ci se vidant notamment par le canal 21 de distribution du fluide de nettoyage. Ceci se poursuit jusqu'à ce que le joint torique 119 placé à l'extrémité aval du doigt 117 franchisse, en direction de l'aval cette fois, le premier épaulement 210 défini par l'intersection de la portion amont et de la portion intermédiaire du canal 21 de distribution du fluide de nettoyage et que ce joint torique 119 se trouve dans ladite portion intermédiaire dudit canal de distribution. Le coulissement du doigt 117 relativement au canal 21 de distribution du fluide de nettoyage devient alors à nouveau étanche, et le fluide de nettoyage ne peut plus s'écouler jusqu'à la portion aval de ce même canal de distribution et jusqu'aux orifices de distribution correspondants.

On cherche à ce stade à éviter le refoulement du fluide de nettoyage hors du dispositif sous l'effet de l'action du ressort, en empêchant le retour du fluide de nettoyage vers le réservoir de stockage dont il émane. Il importe en effet que la tige 2 reste sous pression sous l'effet du fluide de nettoyage encore présent dans la chambre d'admission finale 6 pour qu'elle reste déployée et que le fluide de séchage puisse être projeté depuis une position proche du capteur optique à nettoyer.

Dans ce contexte, selon l'invention, on injecte une quantité prédéfinie de fluide de séchage dans le canal 113 d'admission du fluide de séchage, selon la direction représentée par la flèche B sur la figure 3, simultanément, ou avec un léger décalage, au moment où la distribution de fluide de nettoyage est stoppée. Le fluide de séchage circule dans le canal 113 d'admission du fluide de séchage, selon le trajet B1 représenté en traits continus sur la figure 3, jusqu'à l'extrémité aval dudit canal 113, où il rencontre l'obstacle que constitue la membrane 5 qui obture au moins partiellement l'extrémité aval du canal 113 d'admission du fluide de séchage, sous l'effet de l'admission préalable d'une quantité de fluide de nettoyage, comme décrit plus haut. Selon l'invention, sous l'effet de la pression du fluide de séchage, la membrane 5 se déplace alors de manière à dégager l'extrémité aval du canal 113 d'admission de ce fluide et à autoriser l'admission du fluide de séchage au sein du volume d'admission V. La membrane 5 est alors plaquée contre le siège formé par les épaulements et l'extrémité du tube d'admission 160, dans la position dite d'obturation. En d'autres termes, sous l'effet de la pression d'admission du fluide de séchage, la membrane 5 est repoussée contre le tube d'admission 160, qu'elle obture. Il est à noter ici que la pression d'admission du fluide de séchage sera avantageusement définie légèrement supérieure à la pression d'admission du fluide de nettoyage, de manière à ce que le différentiel de pression ainsi relevé entre la pression exercée sur la membrane par le fluide de séchage et celle exercée sur la face opposée de la membrane par le fluide de nettoyage permette la déformation de la membrane, même si du fluide de nettoyage continue à être injecté par l'embout d'admission 110 de fluide de nettoyage.

Le fluide de séchage emplit la partie de la première chambre d'admission C1 entre le chapeau et la membrane et s'échappe vers la deuxième chambre d'admission C2 par l'espace 171 agencé entre l'extrémité amont de la paroi de compartimentation 17 et la paroi intérieure 42 du chapeau d'admission 4. Depuis la deuxième chambre d'admission C2, le fluide de séchage circule par le canal d'acheminement 1140 vers les orifices de distribution correspondants.

Le fait que la membrane 5 obture complètement l'extrémité amont du tube d'admission 160 permet de fermer de manière étanche la chambre d'admission finale 6, et le fluide de nettoyage qu'elle contient encore y reste donc piégé, venant contrebalancer la force de rappel du ressort 3, en maintenant ainsi la tige de distribution dans la même position relative par rapport au corps creux 1 que celle qu'il avait lors de la distribution du fluide de nettoyage.

Il est à noter que, lors de ces différentes opérations, le tube d'acheminement 114 se déplace, de la même manière que le doigt 117, relativement à la tige de distribution et, en particulier, relativement au canal 22 de distribution du fluide de séchage. Ainsi, lorsqu'une quantité de fluide de nettoyage est admise dans la chambre d'admission finale 6, le tube d'acheminement 114 est entraîné à coulisser au sein de ce canal 22 de distribution, en direction de la portion amont de celui-ci. Avantageusement, les dimensions respectives du tube d'acheminement 114 et de la tige de distribution 2 sont définies de telle manière que le coulissement relatif de ce tube d'acheminement au sein dudit canal 22 de distribution du fluide de séchage reste étanche quelles que soient les positions relatives de ces deux éléments.

L'invention permet ainsi, par la simple mise en place de la membrane 5, de réaliser l'admission et la distribution alternées d'un fluide de nettoyage ou d'un fluide de séchage par le dispositif d'admission et de distribution D, simplifiant ainsi l'architecture globale d'un dispositif de nettoyage destiné à projeter au moins un fluide vers une surface à nettoyer d'un véhicule automobile, tel qu'un capteur optique d'un système de détection optique. De plus, l'invention évite en toutes circonstances tout contact entre fluide de nettoyage et fluide de séchage : il en résulte une meilleure efficacité du nettoyage du capteur considéré, tout risque de présence résiduelle de fluide de nettoyage dans le fluide de séchage étant écarté.

On va maintenant décrire l'architecture hydraulique du dispositif de nettoyage selon l'invention, notamment en se référant à la figure 4. L'architecture hydraulique du dispositif selon l'invention comporte un réservoir 8 de stockage d'un fluide de nettoyage, ainsi qu'une pompe 8' de circulation de ce fluide. Le fluide de nettoyage pompé est envoyé à travers une première conduite 80, qui débouche directement dans l'embout 110 d'admission de fluide de nettoyage.

L'architecture hydraulique comprend également un réservoir 9 de stockage d'un fluide de séchage ou d'obtention d'un flux d'un tel fluide, équipé le cas échéant d'un compresseur qui permet d'obtenir un flux d'air comprimé approprié pour le séchage d'un capteur optique d'un système de détection optique d'un véhicule automobile, une deuxième conduite 90 étant agencée pour délivrer du fluide de séchage à partir du réservoir de stockage à l'intérieur du dispositif de nettoyage.

On va maintenant décrire le dispositif selon un deuxième mode de réalisation de l'invention, en se référant notamment à la figure 5. Ce deuxième mode réalisation diffère notamment du premier mode de réalisation précédemment présenté au niveau de la forme de la tige de distribution des fluides de nettoyage et de séchage.

Notamment, fluide de nettoyage et fluide de séchage sont acheminés par un unique canal de distribution 23 jusqu'à un ensemble d'orifices de distribution communs 24. La figure 5 illustre le dispositif d'admission et de distribution D avec une tige de distribution dans sa position de repos, dans laquelle aucun fluide de nettoyage ni de séchage n'est admis au sein de celle-ci, la tige de distribution 2 étant dans sa position extrême rétractée relativement au corps creux 1.

Dans ce mode de réalisation, l'invention permet également, par la simple mise en place de la membrane 5, de réaliser l'admission et la distribution alternées d'un fluide de nettoyage ou d'un fluide de séchage par le dispositif d'admission et de distribution D, simplifiant ainsi l'architecture globale d'un dispositif de nettoyage d'un capteur optique d'un système de détection optique du véhicule automobile considéré.

Dans ce deuxième mode réalisation, la tige de distribution 2 est percée d'un unique canal de distribution 23 qui présente, de l'amont vers l'aval, au moins une portion amont, une portion intermédiaire dont le diamètre est légèrement inférieur à celui de ladite portion amont, et une portion aval dont le diamètre est inférieur à celui de ladite portion intermédiaire.

On pourra noter que le dispositif de ce deuxième mode de réalisation diffère en outre en la forme du corps creux, ici formé d'une portion tubulaire réalisée d'un seul tenant. Comme précédemment, le fond aval 12 est percé d'un orifice 120 dont la paroi se prolonge, vers l'amont, au sein du corps creux 1, et vers l'aval, vers l'extérieur du dispositif d'admission et de distribution D, par un manchon 121 dont le diamètre intérieur est légèrement supérieur au diamètre extérieur de la tige de distribution 2, de telle manière que ce dernier puisse coulisser librement au sein dudit manchon 121 tout en restant axialement aligné avec celui-ci.

De la même manière que précédemment, le fond amont 11 comporte un embout 110 d'admission du fluide de nettoyage, un tube d'admission 160, une paroi de compartimentation 17 et une lèvre 18, dont les caractéristiques, formes et dimensions sont similaires, ou sensiblement similaires, à celles des mêmes éléments du premier mode de réalisation décrit précédemment. La paroi de compartimentation 17 réalise là encore la compartimentation du volume d'admission V en une première chambre d'admission C1 et une deuxième chambre d'admission C2.

Le fond amont 11 diffère ici de celui mis en oeuvre dans le premier mode de réalisation en ce qu'il comporte, s'étendant vers l'aval, un unique tube d'acheminement 7 percé de part en part, de l'amont vers l'aval, d'un canal d'acheminement 70. Avantageusement, ce tube d'acheminement 7 est radialement agencé, sur le fond amont 11, entre la lèvre 18 et la paroi d'appui 17, de telle manière que, lorsque la tige de distribution 2 est engagée dans le manchon 121 pour réaliser l'assemblage du dispositif d'admission et de distribution D, le tube d'acheminement 7 s'engage dans le canal de distribution 23 agencé dans cette tige de distribution 2. Plus précisément, le tube d'acheminement 7 est radialement agencé sur le fond amont 11 de telle manière que le canal d'acheminement 70 dont il est percé de part en part débouche, à l'amont dudit fond amont 11, entre la paroi de compartimentation 17 et la lèvre 18, c'est-à-dire dans la deuxième chambre C2 d'admission.

Une gorge périphérique 71 est agencée dans la paroi extérieure du tube d'acheminement 7, au voisinage de son extrémité aval, pour accueillir un joint d'étanchéité 72, qui peut notamment être un joint torique. Selon l'invention, le diamètre intérieur de la portion intermédiaire du canal de distribution 23, le diamètre extérieur du tube d'acheminement 7 et le joint d'étanchéité 72 sont définis pour que le tube d'acheminement 7 coulisse de manière étanche dans la portion intermédiaire du canal de distribution 23, tandis que du fluide peut passer au-delà du joint d'étanchéité lorsque la tige coulisse dans la portion amont du canal de distribution.

Le chapeau d'admission 4 est sensiblement identique à celui qui a été décrit précédemment relativement au premier mode de réalisation, à ceci près que ses dimensions sont adaptées pour prendre en compte le remplacement du tube d'acheminement et du doigt dans le premier mode de réalisation par l'unique tube d'acheminement 7 de ce deuxième mode de réalisation.

Il est notable que la membrane 5 est insérée de la même manière que précédemment dans le dispositif d'admission et de distribution, et qu'elle y assure les mêmes fonctions.

Ainsi, l'admission d'une quantité prédéfinie de fluide de nettoyage ou d'une quantité prédéfinie de fluide de séchage se déroule de la même manière que celle décrite précédemment relativement au premier mode de réalisation, à la différence près que le fluide de séchage et le fluide de nettoyage circule dans le même canal de distribution, après avoir circulé séparément l'un dans le doigt d'acheminement 7, par l'intermédiaire du conduit d'acheminement 70 (tel que cela est représenté schématiquement par la flèche B2 visible en traits continus) et l'autre à l'extérieur de ce doigt d'acheminent 7, entre celui-ci et la paroi délimitant le contour du canal de distribution 23.

Un tel agencement est plus compact que l'agencement du premier mode de réalisation. Il ne permet toutefois pas une séparation permanente du fluide de nettoyage et du fluide de séchage, et, lors de la distribution de ce dernier, des traces résiduelles de fluide de nettoyage peuvent également être acheminées jusqu'aux orifices de distribution 24.

Quel que soit le mode de réalisation choisi, l'invention permet, par la présence de la membrane 5, de s'affranchir de la mise en place d'un distributeur électroniquement piloté pour autoriser alternativement l'admission du fluide de nettoyage ou du fluide de séchage au sein du dispositif d'admission et de distribution D. Seul un pilotage de l'ouverture ou de la fermeture d'une simple vanne d'arrêt associée à un réservoir de stockage de fluide de nettoyage et/ou à un réservoir de stockage d'un fluide de séchage sera nécessaire, ce qui simplifie l'architecture hydraulique du dispositif de nettoyage dans son ensemble, tout en conservant l'efficacité de l'opération de nettoyage/séchage du capteur optique considéré. Dans la pratique, on peut aussi envisager que seule l'admission du fluide de séchage soit pilotée par l'ouverture d'une vanne appropriée, avec, pour obtenir le différentiel de pression souhaité, une pression supérieure à celle du fluide de nettoyage amené de manière permanente jusqu'au dispositif d'admission et de distribution D. Lorsque la vanne d'arrêt du circuit du fluide de séchage est fermée, la pression exercée par le fluide de nettoyage sur la membrane 5 conduit ce fluide à être distribué par le dispositif d'admission et de distribution D, ou bien à être rappelé dans le réservoir de stockage lorsque l'ensemble des opérations de nettoyage et de séchage est terminé. Lorsque la vanne d'arrêt du circuit du fluide de séchage est ouverte, la pression de ce fluide, supérieure à celle exercée par le fluide de nettoyage sur la membrane 5, conduit alors le seul fluide de séchage à être distribué par le dispositif d'admission et de distribution D, tout en maintenant la tige de distribution dans une position déployée pour que l'opération de séchage suivant l'opération de nettoyage soit réalisée au plus près du capteur optique à nettoyer.

L'invention ne saurait toutefois se limiter aux moyens et configurations décrits et illustrés, et elle s'applique également à tous moyens ou configurations équivalents et à toute combinaison de tels moyens. En particulier, si l'invention a été décrite ici dans un mode de réalisation dans lequel la géométrie générale du dispositif d'admission et de distribution et de ses composants est une géométrie cylindrique, il va de soi que l'invention s'applique à tout type de géométrie et de formes, dans la mesure où les éléments réalisant les différentes étanchéités et fonctionnalités décrites ici sont présents.

Notamment, on pourra prévoir en variante, sans sortir pour autant du contexte de l'invention, un élément d'obturation présentant une forme différente de celle de la membrane décrite précédemment, et/ou d'autres modes de pilotage de la position de cet élément d'obturation. A titre d'exemple non limitatif, on pourrait prévoir que la membrane n'est pas poussée dans une position extrême ou l'autre par la pression exercée par l'un ou l'autre des fluides et le différentiel de pression qui en résulte, mais par un dispositif d'entraînement mécanique ou piézoélectrique.

## Revendications

1. Dispositif de nettoyage, destiné à projeter au moins un fluide vers une surface à nettoyer d'un véhicule automobile, tel qu'un capteur optique d'un système de détection optique, comprenant au moins un dispositif d'admission et de distribution de fluides (D) dans lequel sont admis sélectivement un fluide de nettoyage et un fluide de séchage à travers deux ensembles d'acheminement distincts (112,160,14,21 ; 113,114,22) depuis un embout d'admission (110, 111) propre à chaque fluide, **caractérisé en ce que** le dispositif d'admission et de distribution de fluides (D) comprend un élément d'obturation mobile (5) entre une première position d'obturation d'un ensemble d'acheminement (112,160,14,21) d'un des fluides et une deuxième position de dégagement de ce même ensemble d'acheminement, l'élément d'obturation (5) étant rendu mobile par le différentiel de pression entre le fluide de séchage et le fluide de nettoyage de part et d'autre de l'élément d'obturation.

2. Dispositif de nettoyage selon la revendication précédente, **caractérisé en ce que** dans la position de dégagement de l'ensemble d'acheminement (112, 160, 14, 21) d'un des fluides, l'élément d'obturation (5) est configuré pour bloquer au moins partiellement l'autre ensemble d'acheminement (113, 114, 22).

3. Dispositif de nettoyage, destiné à projeter au moins un fluide vers une surface à nettoyer d'un véhicule automobile, tel qu'un capteur optique d'un système de détection optique, comprenant au moins un dispositif d'admission et de distribution de fluides (D) dans lequel sont admis sélectivement un fluide de nettoyage et un fluide de séchage à travers deux ensembles d'acheminement distincts (112,160,14,21 ; 113,114,22) depuis un embout d'admission (110, 111) propre à chaque fluide, **caractérisé en ce que** le dispositif d'admission et de distribution de fluides (D) comprend un corps creux (1) d'admission respectivement du fluide de nettoyage et du fluide de séchage, une tige (2) de distribution de ces fluides logée à l'intérieur du corps creux, et comportant des orifices de distribution des fluides de séchage et de nettoyage, et un chapeau d'admission (4), rendu solidaire d'un fond amont (11) délimitant une extrémité du corps creux (1), et **caractérisé en ce qu'**il comprend dans le dispositif d'admission et de distribution de fluides (D) un élément d'obturation mobile (5) entre une première position d'obturation d'un ensemble d'acheminement (112,160,14,21) d'un des fluides et une deuxième position de dégagement de ce même ensemble d'acheminement.

4. Dispositif de nettoyage selon la revendication précédente, **caractérisé en ce que** dans la position de dégagement de l'ensemble d'acheminement (112, 160, 14, 21) d'un des fluides, l'élément d'obturation (5) est configuré pour bloquer au moins partiellement l'autre ensemble d'acheminement (113, 114, 22).

5. Dispositif de nettoyage selon la revendication 3 ou 4, **caractérisé en ce que** l'élément d'obturation (5) est inséré entre le chapeau d'admission (4) et le fond amont (11).

6. Dispositif de nettoyage selon l'une des revendications 3 à 5, **caractérisé en ce qu'**il comporte des moyens de déplacement de la tige de distribution (2) entre une position de repos et une position déployée relativement au corps creux (1).

7. Dispositif de nettoyage selon la revendication précédente, **caractérisé en ce que** lesdits moyens de déplacement de la tige de distribution (2) comprennent des moyens communs avec l'un des ensembles d'acheminement (112, 160, 14, 21) de fluide.

8. Dispositif de nettoyage selon la revendication 6 ou 7, **caractérisé en ce que** les moyens de déplacement de la tige de distribution (2) comprennent un élément de rappel élastique (3) en position de la tige.

9. Dispositif de nettoyage selon la revendication précédente, **caractérisé en ce que** le fond amont (11) porte un embout (110) d'admission du fluide de nettoyage, percé d'un canal (112) d'admission du fluide de nettoyage, tandis que l'embout d'admission (111) du fluide de séchage, percé d'un canal (113) d'admission du fluide de séchage, est porté par le chapeau d'admission (4).

10. Dispositif de nettoyage selon l'une des revendications 3 à 9, **caractérisé en ce que** le fond amont (11) est percé d'un orifice d'admission (16) du fluide de nettoyage, traversant la paroi du fond amont (11), et **en ce que** la paroi délimitant cet orifice se prolonge, vers l'extérieur du corps creux (1), en un tube d'admission (160).

11. Dispositif de nettoyage selon la revendication 10, **caractérisé en ce que** le tube d'admission (160) et le canal (113) d'admission du fluide de séchage sont coaxiaux, ou sensiblement coaxiaux, l'élément d'obturation (5) étant disposé sensiblement perpendiculairement aux axes d'allongement respectifs du tube d'admission et du canal d'admission du fluide de séchage.

12. Dispositif de nettoyage selon la revendication 10 ou 11, **caractérisé en ce que** le tube d'admission (160) et le canal (112) d'admission du fluide de nettoyage sont disposés successivement dans l'ensemble d'acheminement de fluide de nettoyage, l'élément d'obturation (5) étant configuré pour bloquer la circulation de l'un vers l'autre dans la première position d'obturation.

13. Dispositif de nettoyage selon l'une des revendications 3 à 12, **caractérisé en ce que** le fond amont (11) comporte, en outre, s'étendant en direction de l'aval à partir de sa face intérieure, un tube d'acheminement (114, 7) percé de part en part, de l'amont vers l'aval, d'un canal d'acheminement (1140, 70).

14. Dispositif de nettoyage selon l'une des revendications 3 à 13, **caractérisé en ce que** le fond amont (11) comporte, s'étendant en direction de l'amont, une paroi de compartimentation (17) qui partage le volume disposé entre le fond amont (11) et le chapeau (4) en deux chambres d'admission (C1, C2) distinctes.

15. Dispositif de nettoyage selon la revendication précédente, **caractérisé en ce que** l'élément d'obturation (5) est fixé sur les parois délimitant la première chambre (C1).

16. Dispositif de nettoyage selon l'une des revendications 14 ou 15, en combinaison avec la revendication 9 et la revendication 13, **caractérisé en ce que** le canal (113) d'admission du fluide de séchage débouche dans la première chambre (C1), contre l'élément d'obturation (5), et **en ce que** le tube d'acheminement (114, 7) et son canal d'acheminement (1140, 70) s'étendent depuis la deuxième chambre d'admission (C2), un passage (171) étant ménagé entre l'extrémité aval de la paroi de compartimentation (17) et le chapeau d'admission (4).

17. Dispositif de nettoyage selon l'une des revendications 3 à 16, **caractérisé en ce que** la tige de distribution (2) est percée de part en part d'amont en aval d'un canal (21) de distribution du fluide de nettoyage et d'un canal (22) de distribution du fluide de séchage, distincts, qui débouchent chacun, à l'extrémité aval de la tige de distribution, en un ou plusieurs orifices de distribution, respectivement du fluide de nettoyage et du fluide de séchage.

18. Dispositif de nettoyage selon l'une des revendications 3 à 17, **caractérisé en ce que** la tige de distribution (2) est percée de part en part, d'amont en aval, d'un canal unique (23) de distribution des fluides de nettoyage et de séchage, qui débouche, à l'extrémité aval de ladite tige de distribution (2), en un ou plusieurs orifices de distribution (24) communs au fluide de nettoyage et au fluide de séchage.

19. Dispositif de nettoyage selon l'une des revendications précédentes, **caractérisé en ce que** l'élément d'obturation (5) est une membrane.

## Patentansprüche

1. Reinigungsvorrichtung, die dazu bestimmt ist, mindestens eine Flüssigkeit auf eine zu reinigende Oberfläche eines Kraftfahrzeugs, wie einen optischen Sensor eines optischen Erfassungssystems, zu spritzen, umfassend mindestens eine Einlass- und Verteilungsvorrichtung von Flüssigkeiten (D), in die selektiv eine Reinigungsflüssigkeit und eine Trocknungsflüssigkeit durch zwei getrennte Zuführeinheiten (112, 160, 14, 21; 113, 114, 22) von einem jeder Flüssigkeit eigenen Einlassstutzen (110, 111) aus zugeführt werden, **dadurch gekennzeichnet, dass** die Einlass- und Verteilungsvorrichtung von Flüssigkeiten (D) ein Verschlusselement (5), das zwischen einer ersten Verschlussposition einer Zuführeinheit (112, 160, 14, 21) einer der Flüssigkeiten und einer zweiten Freigabeposition dieser selben Zuführeinheit beweglich ist, umfasst, wobei das Verschlusselement (5) durch den Druckunterschied zwischen der Trocknungsflüssigkeit und der Reinigungsflüssigkeit beiderseits des Verschlusselements beweglich gemacht wird.

2. Reinigungsvorrichtung nach dem vorhergehenden Anspruch, **dadurch gekennzeichnet, dass** in der Freigabeposition der Zuführeinheit (112, 160, 14, 21) einer der Flüssigkeiten das Verschlusselement (5) eingerichtet ist, um zumindest teilweise die andere Zuführeinheit (113, 114, 22) zu blockieren.

3. Reinigungsvorrichtung, die dazu bestimmt ist, mindestens eine Flüssigkeit auf eine zu reinigende Oberfläche eines Kraftfahrzeugs, wie einen optischen Sensor eines optischen Erfassungssystems, zu spritzen, umfassend mindestens eine Einlass- und Verteilungsvorrichtung von Flüssigkeiten (D), in die selektiv eine Reinigungsflüssigkeit und eine Trocknungsflüssigkeit durch zwei getrennte Zuführeinheiten (112, 160, 14, 21; 113, 114, 22) von einem jeder Flüssigkeit eigenen Einlassstutzen (110, 111) aus zugeführt werden, **dadurch gekennzeichnet, dass** die Einlass- und Verteilungsvorrichtung von Flüssigkeiten (D) einen Hohlkörper (1) zum Einlassen der Reinigungsflüssigkeit bzw. der Trocknungsflüssigkeit, eine Stange (2) zur Verteilung dieser Flüssigkeiten, die in dem Hohlkörper angeordnet ist und Öffnungen zur Verteilung der Trocknungs- und Reinigungsflüssigkeiten umfasst, und eine Einlasskappe (4) umfasst, die mit einem stromaufwärtigen Boden (11) verbunden ist, der ein Ende des Hohlkörpers (1) begrenzt, und **dadurch gekennzeichnet, dass** sie in der Einlass- und Verteilungsvorrichtung von Flüssigkeiten (D) ein Verschlusselement (5) umfasst, das zwischen einer ersten Verschlussposition einer Zuführeinheit (112, 160, 14, 21) einer der Flüssigkeiten und einer zweiten Freigabeposition dieser selben Zuführeinheit beweglich ist.

4. Reinigungsvorrichtung nach dem vorhergehenden Anspruch, **dadurch gekennzeichnet, dass** in der Freigabeposition der Zuführeinheit (112, 160, 14, 21) einer der Flüssigkeiten das Verschlusselement (5) eingerichtet ist, um zumindest teilweise die andere Zuführeinheit (113, 114, 22) zu blockieren.

5. Reinigungsvorrichtung nach Anspruch 3 oder 4, **dadurch gekennzeichnet, dass** das Verschlusselement (5) zwischen der Einlasskappe (4) und dem stromaufwärtigen Boden (11) eingesetzt ist.

6. Reinigungsvorrichtung nach einem der Ansprüche 3 bis 5, **dadurch gekennzeichnet, dass** die Mittel zur Verlagerung der Verteilungsstange (2) zwischen einer Ruheposition und einer ausgefahrenen Position in Bezug zum Hohlkörper (1) umfasst.

7. Reinigungsvorrichtung nach dem vorhergehenden Anspruch, **dadurch gekennzeichnet, dass** die Verlagerungsmittel der Verteilungsstange (2) gemeinsame Mittel mit einer der Flüssigkeitszuführeinheiten (112, 160, 14, 21) umfassen.

8. Reinigungsvorrichtung nach Anspruch 6 oder 7, **dadurch gekennzeichnet, dass** die Verlagerungsmittel der Verteilungsstange (2) ein elastisches Rückstellelement (3) der Stange in ihre Position umfassen.

9. Reinigungsvorrichtung nach dem vorhergehenden Anspruch, **dadurch gekennzeichnet, dass** der stromaufwärtige Boden (11) einen Einlassstutzen (110) für die Reinigungsflüssigkeit trägt, der mit einem Einlasskanal (112) für die Reinigungsflüssigkeit versehen ist, während der Einlassstutzen (111) der Trocknungsflüssigkeit, der mit einem Einlasskanal (113) der Trocknungsflüssigkeit versehen ist, von der Einlasskappe (4) getragen wird.

10. Reinigungsvorrichtung nach einem der Ansprüche 3 bis 9, **dadurch gekennzeichnet, dass** der stromaufwärtige Boden (11) mit einer Einlassöffnung (16) der Reinigungsflüssigkeit versehen ist, die durch die Wand des stromaufwärtigen Bodens (11) hindurchgeht, und dass sich die Wand, die diese Öffnung begrenzt, außerhalb des Hohlkörpers (1) in einem Einlassrohr (160) verlängert.

11. Reinigungsvorrichtung nach Anspruch 10, **dadurch gekennzeichnet, dass** das Einlassrohr (160) und der Einlasskanal (113) der Trocknungsflüssigkeit koaxial oder im Wesentlichen koaxial sind, wobei das Verschlusselement (5) im Wesentlichen senkrecht auf die jeweiligen Verlängerungsachsen des Einlassrohrs und des Einlasskanals der Trocknungsflüssigkeit stehen.

12. Reinigungsvorrichtung nach Anspruch 10 oder 11, **dadurch gekennzeichnet, dass** das Einlassrohr (160) und der Einlasskanal (112) der Reinigungsflüssigkeit nacheinander in der Zuführeinheit der Reinigungsflüssigkeit angeordnet sind, wobei das Verschlusselement (5) eingerichtet ist, um die Zirkulation der einen zur anderen in der ersten Verschlussposition zu blockieren.

13. Reinigungsvorrichtung nach einem der Ansprüche 3 bis 12, **dadurch gekennzeichnet, dass** der stromaufwärtige Boden (11) ferner, wobei es sich in eine Richtung stromabwärts zu seiner Innenseite erstreckt, ein Zuführrohr (114, 7) umfasst, das stromaufwärts nach stromabwärts mit einem Zuführkanal (1140, 70) durchbohrt ist.

14. Reinigungsvorrichtung nach einem der Ansprüche 3 bis 13, **dadurch gekennzeichnet, dass** der stromaufwärtige Boden (11), wobei sie sich in Richtung stromaufwärts erstreckt, eine Abteilungswand (17) umfasst, die das zwischen dem stromaufwärtigen Boden (11) und der Kappe (4) vorhandene Volumen in zwei getrennte Einlasskammern (C1, C2) teilt.

15. Reinigungsvorrichtung nach dem vorhergehenden Anspruch, **dadurch gekennzeichnet, dass** das Verschlusselement (5) an den Wänden, die die erste Kammer (C1) begrenzen, befestigt ist.

16. Reinigungsvorrichtung nach einem der Ansprüche 14 oder 15 in Kombination mit Anspruch 9 und Anspruch 13, **dadurch gekennzeichnet, dass** der Einlasskanal (113) der Trocknungsflüssigkeit in der ersten Kammer (C1) gegen das Verschlusselement (5) mündet, und dass sich das Zuführrohr (114, 7) und sein Zuführkanal (1140, 70) von der zweiten Einlasskammer (C2) aus erstrecken, wobei ein Durchgang (171) zwischen dem stromabwärtigen Ende der Abteilungswand (17) und der Einlasskappe (4) ausgespart ist.

17. Reinigungsvorrichtung nach einem der Ansprüche 3 bis 16, **dadurch gekennzeichnet, dass** die Verteilungsstange (2) stromaufwärts nach stromabwärts mit einem Verteilungskanal (21) der Reinigungsflüssigkeit und einem Verteilungskanal (22) der Trocknungsflüssigkeit, die getrennt sind, durchbohrt ist, die jeweils am stromabwärtigen Ende der Verteilungsstange in eine oder mehrere Verteilungsöffnungen für die Reinigungsflüssigkeit bzw. die Trocknungsflüssigkeit münden.

18. Reinigungsvorrichtung nach einem der Ansprüche 3 bis 17, **dadurch gekennzeichnet, dass** die Verteilungsstange (2) stromaufwärts nach stromabwärts mit einem einzigen Verteilungskanal (23) der Reinigungs- und Trocknungsflüssigkeiten durchbohrt ist, der am stromabwärtigen Ende der Verteilungsstange (2) in eine oder mehrere Verteilungsöffnungen (24) münden, die der Reinigungsflüssigkeit und der Trocknungsflüssigkeit gemeinsam sind.

19. Reinigungsvorrichtung nach einem der vorhergehenden Ansprüche, **dadurch gekennzeichnet, dass** das Verschlusselement (5) eine Membran ist.

## Claims

1. Cleaning device, intended to spray at least one fluid towards a surface to be cleaned of a motor vehicle, such as an optical sensor of an optical detection system, comprising at least one fluid intake and distribution device (D) into which are selectively admitted a cleaning fluid and a drying fluid through two distinct sets of runs (112,160,14,21; 113,114, 22) from an intake end-fitting (110, 111) specific to each fluid, **characterized in that** the fluid intake and distribution device (D) comprises a blocking element (5) movable between a first position of blocking of a set of runs (112,160,14, 21) of one of the fluids and a second position of clearing of this same set of runs,the blocking element (5) being rendered movable by the pressure differential between the drying fluid and the cleaning fluid on either side of the blocking element.

2. Cleaning device according to the preceding claim, **characterized in that** in the position of clearing of the set of runs (112, 160, 14, 21) of one of the fluids, the blocking element (5) is configured to at least partially block the other set of runs (113, 114, 22).

3. Cleaning device, intended to spray at least one fluid towards a surface to be cleaned of a motor vehicle, such as an optical sensor of an optical detection system, comprising at least one fluid intake and distribution device (D) into which are selectively admitted a cleaning fluid and a drying fluid through two distinct sets of runs (112,160,14,21; 113,114, 22) from an intake end-fitting (110, 111) specific to each fluid, **characterized in that** the fluid intake and distribution device (D) comprises a hollow body (1) for the intake respectively of the cleaning fluid and of the drying fluid, a stem (2) for distributing these fluids housed inside the hollow body, and including drying and cleaning fluid distribution orifices, and an intake cap (4), secured to an upstream bottom (11) delimiting one end of the hollow body (1) and **characterized in that** it comprises in the fluid intake and distribution device (D) a blocking element (5) movable between a first position of blocking of a set of runs (112,160,14, 21) of one of the fluids and a second position of clearing of this same set of runs.

4. Cleaning device according to the preceding claim, **characterized in that** in the position of clearing of the set of runs (112, 160, 14, 21) of one of the fluids, the blocking element (5) is configured to at least partially block the other set of runs (113, 114, 22).

5. Cleaning device according to claim 3 or 4, **characterized in that** the blocking element (5) is inserted between the intake cap (4) and the upstream bottom (11).

6. Cleaning device according to one of the Claims 3 to 5, **characterized in that** it includes means for displacing the distribution stem (2) between a position of rest and a deployed position relative to the hollow body (1).

7. Cleaning device according to the preceding claim, **characterized in that** said means for displacing the distribution stem (2) comprise means common with one of the sets of fluid runs (112, 160, 14, 21).

8. Cleaning device according to Claim 6 or 7, **characterized in that** the means for displacing the distribution stem (2) comprise a stem-positioning elastic return element (3).

9. Cleaning device according to the preceding claim, **characterized in that** the upstream bottom (11) bears a cleaning fluid intake end-fitting (110), pierced by a cleaning fluid intake channel (112), while the drying fluid intake end-fitting (111), pierced by a drying fluid intake channel (113), is borne by the intake cap (4).

10. Cleaning device according to one of Claims 3 to 9, **characterized in that** the upstream bottom (11) is pierced by a cleaning fluid intake orifice (16), passing through the wall of the upstream bottom (11), and **in that** the wall delimiting this orifice is prolonged, to the outside of the hollow body (1), in an intake pipe (160).

11. Cleaning device according to Claim 10, **characterized in that** the drying fluid intake pipe (160) and intake channel (113) are coaxial, or substantially coaxial, the blocking element (5) being arranged substantially at right angles to the respective axes of elongation of the drying fluid intake pipe and intake channel.

12. Cleaning device according to Claim 10 or 11, **characterized in that** the cleaning fluid intake pipe (160) and intake channel (112) are arranged successively in the set of runs for cleaning fluid, the blocking element (5) being configured to block the circulation from one to the other in the first blocking position.

13. Cleaning device according to one of Claims 3 to 12, **characterized in that** the upstream bottom (11) includes, in addition, extending in the downstream direction from its internal face, a run pipe (114, 7) pierced right through, from upstream to downstream, by a run channel (1140, 70).

14. Cleaning device according to one of Claims 3 to 13, **characterized in that** the upstream bottom (11) includes, extending in the upstream direction, a partitioning wall (17) which divides the volume arranged between the upstream bottom (11) and the cap (4) into two distinct intake chambers (C1, C2).

15. Cleaning device according to the preceding claim, **characterized in that** the blocking element (5) is fixed to the walls delimiting the first chamber (C1).

16. Cleaning device according to one of Claims 14 or 15, in combination with Claim 9 and Claim 13, **characterized in that** the drying fluid intake channel (113) emerges in the first chamber (C1), against the blocking element (5), and **in that** the run pipe (114, 7) and its run channel (1140, 70) extend from the second intake chamber (C2), a passage (171) being formed between the downstream end of the partitioning wall (17) and the intake cap (4).

17. Cleaning device according to one of Claims 3 to 16, **characterized in that** the distribution stem (2) is pierced right through, from upstream to downstream, by a cleaning fluid distribution channel (21) and a drying fluid distribution channel (22), that are distinct, which each emerge, at the downstream end of the distribution stem, at one or more distribution orifices, respectively for the cleaning fluid and for the drying fluid.

18. Cleaning device according to one of Claims 3 to 17, **characterized in that** the distribution stem (2) is pierced right through, from upstream to downstream, by a single cleaning and drying fluid distribution channel (23), which emerges, at the downstream end of said distribution stem (2), at one or more distribution orifices (24) common to the cleaning fluid and to the drying fluid.

19. Cleaning device according to one of the preceding claims, **characterized in that** the blocking element (5) is a membrane.
